# EUROPÄISCHE PATENTSCHRIFT

(11) **EP 4 217 574 B1**
(45) Veröffentlichungstag und Bekanntmachung des Hinweises auf die Patenterteilung: **26.03.2025**
(21) Anmeldenummer: 21783232.8
(22) Anmeldetag: 24.09.2021
(51) Int. Cl.: E05F 1/10, E05F 3/10, E05F 3/22, E05F 15/63, H02K 7/116, H02K 21/24

(54) **ANTRIEBSEINRICHTUNG ZUM BEWEGEN EINES FLÜGELS**
DRIVE DEVICE FOR MOVING A LEAF
DISPOSITIF D'ENTRAÎNEMENT POUR DÉPLACER UN BATTANT

(30) Priorität: 25.09.2020 DE 102020125102
(43) Veröffentlichungstag der Anmeldung: 02.08.2023
(73) Patentinhaber: dormakaba Deutschland GmbH, 58256 Ennepetal (DE)
(72) Erfinder: JAEHNKE, Jan-Hendrik, 58256 Ennepetal (DE); BALK, Thomas, 58256 Ennepetal (DE); BUSCH, Sven, 58256 Ennepetal (DE); WAGNER, Martin, 58256 Ennepetal (DE); VOM BROCKE, Jan Eric, 58256 Ennepetal (DE)
(74) Vertreter: Balder IP Law, S.L.
(86) Internationale Anmeldenummer: PCT/EP2021/076322
(87) Internationale Veröffentlichungsnummer: WO 2022/063964

(56) Entgegenhaltungen:
- WO-A1-2013/169888
- DE-B3- 102015 112 685
- US-A- 4 727 679
- US-A1- 2009 206 777

## Beschreibung

Die Erfindung betrifft eine Antriebseinrichtung zum Bewegen eines Flügels mit den Merkmalen des Oberbegriffs des Anspruchs 1.

Antriebseinrichtungen können zum Bewegen eines Flügels Anwendung finden, wobei unter einem Flügel insbesondere ein Tür- oder Fensterflügel verstanden wird. Als Türflügel wird der bewegbare Teil einer Tür bezeichnet, für den auch die Bezeichnung Türblatt geläufig ist. Derartige Antriebseinrichtungen zum Bewegen eines Flügels sind bekannt. Solche Antriebseinrichtungen umfassen eine Antriebseinheit sowie ein mit der Antriebseinheit gekoppeltes Zahnradgetriebe. Über das Zahnradgetriebe ist die Antriebseinheit mit einem Türschließer gekoppelt, so dass ein Flügel einer Tür durch den Türschließer geschlossen werden und bei Bedarf - beispielsweise im Brandfall zum Rauch- und Wärmeabzug - durch den Elektromotor geöffnet werden kann. Das Zahnradgetriebe ist an einer äußeren Oberfläche der Antriebseinheit offenliegend vorgesehen und nimmt daher einen zusätzlichen Bauraum ein.

Eingangs genannte Antriebseinrichtungen werden typischerweise direkt an dem zu bewegenden Flügel oder an einer Türzarge bzw. einem Fensterrahmen vorgesehen. Insbesondere bei der Montage an der Türzarge oder dem Fensterrahmen ist der zur Verfügung stehende Bauraum sehr stark limitiert.

WO 2013/169888 A1 offenbart eine solche Antriebseinrichtung.

Vor diesem Hintergrund stellt sich die Aufgabe, eine kompakte Ausgestaltung der Antriebseinrichtung zu ermöglichen.

Die Aufgabe wird durch eine Antriebseinrichtung zum Bewegen eines Flügels, insbesondere eines Türflügels oder eines Fensterflügels, mit den Merkmalen des Anspruchs 1 gelöst. Vorteilhafte Weiterbildungen der Antriebseinrichtung sind in den abhängigen Ansprüchen, der Beschreibung und in den Figuren angegeben. Merkmale und Details, die in Zusammenhang mit der erfindungsgemäßen Antriebseinrichtung beschrieben sind, gelten dabei auch in Zusammenhang mit dem erfindungsgemäßen Verfahren und/oder der erfindungsgemäßen Verwendung und umgekehrt.

Die Beschreibung charakterisiert und spezifiziert die Erfindung insbesondere im Zusammenhang mit den Figuren zusätzlich.

Besonders vorteilhaft wird eine Antriebseinrichtung zum Bewegen eines Flügels, insbesondere eines Türflügels oder eines Fensterflügels angegeben. Die Antriebseinrichtung weist eine elektrische Maschine umfassend einen, insbesondere einzigen, Stator und einen, insbesondere einzigen, um eine Maschinenachse drehbaren Rotor und mit einem mit der elektrischen Maschine gekoppelten Getriebe auf. Das Getriebe weist ein erstes koaxial mit der Maschinenachse drehbares Getriebeelement auf. Insbesondere kann das erste Getriebeelement drehfest mit dem Rotor verbunden sein.

Diese Ausgestaltung ist vorteilhaft hinsichtlich einer Bauraumeinsparung in radialer Richtung der elektrischen Maschine.

Mit dem Begriff von Achsen, insbesondere wie bei Flügelachse, Abtriebsachse, Maschinenachse, Drehachse, sind virtuelle Achsen gemeint, die in ihrer Erstreckung grundsätzlich nicht begrenzt sind.

Erfindungsgemäß weist das Getriebe ein zweites Getriebeelement auf, welches mit dem ersten Getriebeelement wirkverbunden ist, wobei eine Drehachse des zweiten Getriebeelements in einem Bauraum zwischen der Maschinenachse und einer virtuell in axialer Richtung der Maschine verlängerten äußeren Mantelfläche des Rotors oder einer virtuell in axialer Richtung der Maschine verlängerte äußere Mantelfläche des Stators, insbesondere parallel zu der Maschinenachse, verläuft.

Diese Ausgestaltung ist vorteilhaft hinsichtlich einer weiteren Bauraumeinsparung in radialer Richtung der elektrischen Maschine.

Insbesondere kann dabei jede Drehachse eines jeden Getriebeelementes parallel zu der Maschinenachse verlaufen.

Insbesondere kann das erste Getriebeelement vollständig in einem Bauraum angeordnet sein, wobei der Bauraum durch eine virtuell in axialer Richtung der Maschine verlängerte äußere Mantelfläche des Rotors begrenzt wird.

Bevorzugt kann sein, dass das erste Getriebeelement und das zweite Getriebeelement oder das gesamte Getriebe vollständig in einem Bauraum angeordnet ist, wobei der Bauraum durch eine virtuell in axialer Richtung der Maschine verlängerte äußere Mantelfläche des Rotors oder durch eine virtuell in axialer Richtung der Maschine verlängerte äußere Mantelfläche des Stators begrenzt wird.

Bevorzugt kann sein, dass die Antriebseinrichtung ein Maschinen-Gehäuse und/oder ein Getriebe-Gehäuse und/oder ein Motor-Getriebe-Gehäuse aufweist. Weiter bevorzugt kann sein, dass die Maschine zumindest teilweise innerhalb des Maschinen-Gehäuses angeordnet ist. Besonders bevorzugt kann sein, dass das Getriebe zumindest teilweise innerhalb des Motor-Getriebe-Gehäuses angeordnet ist.

Dabei bedeutet die Formulierung - innerhalb des Gehäuses -, dass die Elemente zumindest teilweise, insbesondere vollständig, in dem vom Gehäuse gebildeten Raum angeordnet sind.

Alternativ oder kumulativ können die Maschine und/oder das Getriebe zumindest teilweise, insbesondere vollständig, innerhalb des Motor-Getriebe-Gehäuses angeordnet sein.

Diese Ausgestaltung ist hinsichtlich einer Modularität der Antriebseinrichtung, also der voneinander separierbaren Module und/oder Elemente vorteilhaft.

Insbesondere können das Maschinen-Gehäuse und/oder das Getriebe-Gehäuse von dem Motor-Getriebe-Gehäuses ausgebildet sein.

Insbesondere kann das Maschinen-Gehäuse und/oder das Getriebe-Gehäuse vorgefertigte Aufnahmestellen zur formschlüssigen und/oder kraftschlüssigen und/oder stoffschlüssigen Verbindung untereinander aufweisen. Ferner können das Maschinen-Gehäuse und/oder das Getriebe-Gehäuse einstückig ausgebildet sein.

Insbesondere können das Maschinen-Gehäuse und/oder das Motor-Getriebe-Gehäuse und/oder ein Schließer-Gehäuse jeweils eine oder mehrere vorgefertigte Aufnahmestellen zur formschlüssigen und/oder kraftschlüssigen und/oder stoffschlüssigen Verbindung mit der elektrischen Maschine und/oder dem Getriebe aufweisen. Insbesondere kann eine oder mehrere derartige Verbindungen in Form zumindest einer Verschraubung und/oder einer Verstiftung und/oder einer Presspassung und/oder einer T-Nut und/oder einer Schnappverbindung ausgeführt sein.

Diese Ausgestaltung ist vorteilhaft hinsichtlich einer einfachen und montagefreundlichen Bauweise.

Bevorzugt kann sein, dass das Getriebe als Zahnradgetriebe, insbesondere als Stirnradgetriebe und/oder Planetengetriebe, oder als Exzentergetriebe ausgebildet ist.

Als Planetengetriebe kann das Getriebe ein mit dem Rotor drehfestes, insbesondere einstückiges, Sonnenrad, mehrere um das Sonnenrad an einem Planetenträger befestigte Planetenräder und ein mit den Planeten in Eingriff stehendes Hohlrad aufweisen. Dabei kann das Hohlrad drehbar gelagert sein und den Leistungsausgang des Planetengetriebes bilden, wobei der Planetenträger feststehend ausgeführt ist. Alternativ kann der Planetenträger drehbar gelagert sein und den Leistungsausgang des Planetengetriebes bilden, wobei das Hohlrad feststehend ausgeführt ist. Die Begriffe Planet und Planetenrad werden synonym verwendet.

Insbesondere kann das Getriebe als eine Kombination aus Planetengetriebe und Stirnradgetriebe ausgebildet sein. Dabei kann das Hohlrad des Planetengetriebes eine Außenverzahnung aufweisen und als Stirnrad agieren, insbesondere wobei das Hohlrad in Eingriff mit einem Schließer-Rad eines Schließer-Moduls und/oder einem Schnittstellenelement steht und/oder wobei das Hohlrad das Schnittstellenelement bildet.

Als Exzentergetriebe kann das Getriebe als Planeten-Exzentergetriebe und/oder Wellgetriebe ausgeführt sein.

Weiter bevorzugt kann sein, dass das Getriebe als Planetengetriebe ausgeführt ist, wobei das erste Getriebeelement als Sonnenrad und zumindest ein zweites Getriebeelement als Planetenrad ausgebildet ist. Bevorzugt kann sein, dass das Getriebe zumindest eine Wolfromstufe aufweist.

Als Planetengetriebe kann das Getriebe ferner zumindest eine Wolfromstufe aufweisen. In einer bevorzugten Ausführungsform einer derartigen Wolfromstufe weist das Planetengetriebe eine erste Getriebestufe und eine zweite Getriebestufe auf, wobei die erste Getriebestufe das Sonnenrad, mehrere erste an einem Planetenträger befestigten, von dem Sonnenrad angetriebenen Planeten und ein erstes feststehendes Hohlrad umfasst. Die zweite Getriebestufe umfasst ein zweites drehbares Hohlrad, und zweite mit den ersten Planeten drehfeste, insbesondere einstückige Planeten. Die zweiten Planeten treiben das zweite Hohlrad an. Insbesondere kann das zweite Hohlrad dabei den Leistungsausgang des Planetengetriebes bilden.

Bevorzugt kann sein, dass das Getriebe das erstes Hohlrad umfasst, welches in Eingriff mit dem Planetenrad steht, wobei das Planetenrad an einem Planetenträger drehbar gelagert ist, wobei der Planetenträger an dem Sonnenrad oder an dem drehfest mit dem Sonnenrad verbundenen Rotor drehbar gelagert ist.

Insbesondere kann das erste Hohlrad eine erste Anzahl von Zähnen aufweisen und das Getriebe ein zweites Hohlrad mit einer zweiten Anzahl von Zähnen aufweisen, wobei die Differenz zwischen der ersten und der zweiten Anzahl einen Wert beträgt, der kleiner ist als 5, bevorzugt kleiner ist als 2, besonders bevorzugt 1 ist.

Erfindungsgemäß weist die Antriebseinrichtung eine um eine Abtriebsachse drehbare Abtriebswelle zur, insbesondere drehfesten, Verbindung mit einem Hebel auf, wobei die Abtriebsachse parallel oder koaxial zu der Maschinenachse verläuft.

Dabei dient der Hebel zur Ausbildung der Verbindung der Antriebseinrichtung mit dem Flügel oder mit einer Zarge, wobei die Antriebseinrichtung wahlweise an der Zarge oder an dem Flügel montierbar ist. Von dem Begriff Zarge wird im Sinne der Erfindung auch ein Türrahmen oder Fensterrahmen umfasst. Insbesondere kann der Hebel derart ausgebildet sein, dass eine Spannungsversorgung der elektrischen Maschine und/oder zumindest ein Steuerungssignal für die elektrische Maschine über den Hebel an ein Motor-Getriebe-Modul, insbesondere an die elektrische Maschine, übertragbar sind.

Erfindungsgemäß weist die Antriebseinrichtung ein Schließer-Modul mit einem mechanischen Energiespeicher auf.

Insbesondere kann der mechanische Energiespeicher eine oder mehrere Druckfedern und/oder Zugfedern aufweisen, die mit einem Laschenwagen in Verbindung stehen. Dabei dient der Laschenwagen der Ausbildung einer Wirkverbindung zwischen einem Übersetzungselement und dem mechanischen Energiespeicher des Schließer-Moduls. Daher kann auch im Notfall, beispielsweise bei einem Brand, ein sicheres rein mechanisches, also unbestromtes Schließen durch das Schließer-Modul ermöglicht werden.

Erfindungsgemäß umfasst die Antriebseinrichtung das Schließer-Modul mit dem mechanischen Energiespeicher und einem Übersetzungselement zur Übersetzung einer linearen Bewegung des Energiespeicher in eine Drehbewegung des Übersetzungselements. Insbesondere kann das Übersetzungselement als Kurvenscheibe ausgebildet sein.. Je nach Anforderungen kann die Kurvenscheibe symmetrisch oder asymmetrisch ausgebildet sein. Ferner kann die Kurvenscheibe als Hubkurvenscheibe, insbesondere herzförmig, ausgebildet sein.

Insbesondere kann das Schließer-Modul zumindest teilweise, insbesondere vollständig, in einem Bauraum zwischen der elektrischen Maschine und einer Hauptschließkante des Flügels angeordnet sein.

Erfindungsgemäß umfasst das Schließer-Modul ein mit dem Energiespeicher, mittels des Übersetzungselements, wirkverbundenes Schließer-Zahnrad.

Bevorzugt kann sein, dass das Schließer-Rad koaxial, insbesondere drehfest, zu dem Übersetzungselement angeordnet ist. Bevorzugt können das Übersetzungselement und das Schließer-Rad formschlüssig und/oder kraftschlüssig und/oder stoffschlüssig verbunden sein, besonders bevorzugt einstückig ausgebildet sein. Insbesondere können die Abtriebsachse und eine Drehachse des Übersetzungselements und/oder die Drehachse des Schließer-Rads beabstandet voneinander, insbesondere parallel zueinander, verlaufen.

Einerseits drehen sich die Abtriebswelle und das Übersetzungselement dadurch nicht um dieselbe Drehachse und können an unterschiedlichen Positionen, insbesondere modular, angeordnet werden. Andererseits werden durch den parallelen Verlauf Energieverluste reduziert und die Montage erleichtert.

Das Schließer-Rad und das Übersetzungselement können dabei jeweils einzeln oder gemeinsam um eine gemeinsame Drehachse drehbar gelagert sein. Ferner können das Schließer-Rad und das Übersetzungselement jeweils einzeln oder gemeinsam an einem fixierten Achskörper mittels eines oder mehrerer Drehlager, insbesondere Wälzlager oder Gleitlager, insbesondere Nadellager oder Kugellager, drehbar gelagert sein. Der Achskörper ist dabei nicht drehbar.

Insbesondere können das Übersetzungselement und das Schließer-Rad kraftschlüssig und/oder formschlüssig und/oder stoffschlüssig miteinander drehfest verbunden oder einstückig ausgebildet sein.

Diese Ausgestaltung ist vorteilhaft hinsichtlich einer Raumeinsparung in axialer Ausdehnung, dadurch, dass die Lager von dem Übersetzungselement und/oder von dem Schließer-Rad umgeben angeordnet werden können.

Insbesondere können das Übersetzungselement und/oder das Schließer-Rad jeweils einzeln oder gemeinsam mittels zumindest eines Drehlagers, bevorzugt eines Wälzlagers oder eines Gleitlagers, insbesondere eines Nadellagers oder eines Kugellagers, an dem Achskörper drehbar gelagert sein.

Insbesondere kann das Schließer-Modul ein Schließer-Gehäuse aufweisen. Insbesondere kann der Achskörper an dem Schließer-Gehäuse fixiert sein.

Bevorzugt kann sein, dass das Getriebe ein Übersetzungsverhältnis als Quotient aus der Drehzahl des Rotors als Dividend und der Drehzahl des Schließer-Rads oder der Drehzahl des Übersetzungselementes kleiner als 125, bevorzugt kleiner als 100, besonders bevorzugt kleiner als 75, aufweist.

Bevorzugt kann sein, dass die Antriebseinrichtung zumindest ein Schnittstellenelement zur Ausbildung einer Wirkverbindung zwischen der elektrischen Maschine und dem Schließer-Modul umfasst. Insbesondere kann das Schnittstellenelement zumindest ein Zahnrad umfassen.

Mittels des Schnittstellenelements ist ein Drehmoment von dem Rotor auf das Schließer-Modul und/oder von dem Schließer-Modul auf den Rotor übertragbar. Das Schnittstellenelement kann dabei mittels zumindest eines Getriebeelementes des Getriebes, insbesondere eines Hohlrads, und/oder mittels zumindest eines Elements des Schließer-Moduls, insbesondere mittels des Schließer-Rads und/oder durch ein zusätzliches Element gebildet werden. Das Schnittstellenelement kann einteilig oder mehrteilig ausgeführt sein. Dabei steht das Schnittstellenelement in Wirkverbindung, insbesondere in Eingriff, mit dem Getriebe und in Wirkverbindung mit dem Energiespeicher.

Insbesondere kann mittels des Schnittstellenelements ein Drehmoment von der Abtriebswelle auf das Schließer-Modul und/oder von dem Schließer-Modul auf die Abtriebswelle übertragbar sein. Das Schnittstellenelement kann dabei mittels zumindest eines Getriebeelementes des Getriebes und/oder mittels zumindest eines Elements des Schließer-Moduls und/oder durch ein zusätzliches Element gebildet werden. Das Schnittstellenelement kann einteilig oder mehrteilig ausgeführt sein.

Insbesondere kann das Motor-Getriebe-Gehäuse eine erste Öffnung umfassen und das Schließer-Gehäuse eine zweite Öffnung umfassen. Das Motor-Getriebe-Gehäuse und das Schließer-Gehäuse können derart zueinander angeordnet sein, dass durch die erste und die zweite Öffnung das Schließer-Modul, insbesondere der Energiespeicher, und das Getriebe, insbesondere eine Abtriebswelle, mittels des Schnittstellenelements miteinander in Wirkverbindung stehen.

Insbesondere können dabei die Wände der jeweiligen Gehäuse, welche die erste und die zweite Öffnung umfassen, derart ausgeführt sein, dass das Motor-Getriebe-Gehäuse und das Schließer-Gehäuse bündig aneinander montiert werden können.

Insbesondere kann das Schnittstellenelement in das Motor-Getriebe-Gehäuse und/oder in das Schließer-Gehäuse hineinragen. Insbesondere kann das Schnittstellenelement in den von dem jeweiligen Gehäuse gebildeten Raum hineinragen.

Insbesondere kann das Motor-Getriebe-Gehäuse mit dem Schließer-Gehäuse kraftschlüssig und/oder formschlüssig und/oder stoffschlüssig verbunden sein. Eine solche Verbindung kann beispielhaft insbesondere mittels zumindest einer Verschraubung und/oder einer Verstiftung und/oder einer Presspassung und/oder T-Nut und/oder einer Schnappverbindung bewirkt werden

Bevorzugt kann sein, dass die Antriebseinrichtung das Motor-Getriebe-Gehäuse und das Schließer-Gehäuse aufweist, wobei die Maschine und das Getriebe zumindest teilweise innerhalb des Motor-Getriebe-Gehäuses angeordnet sind, wobei der Energiespeicher innerhalb des Schließer-Gehäuses angeordnet ist, wobei die elektrische Maschine und der Energiespeicher mittels des Schnittstellenelements in Wirkverbindung stehen. Bevorzugt kann sein, dass das Schnittstellenelement durch eine erste Öffnung des Motor-Getriebe-Gehäuses in das Motor-Getriebe-Gehäuse und/oder durch eine zweite Öffnung des Schließer-Gehäuses in das Schließer-Gehäuse hineinragt.

Bevorzugt kann sein, dass die elektrische Maschine als Axialflussmaschine ausgebildet ist.

Diese Ausgestaltung ist vorteilhaft hinsichtlich einer kompakten Bauweise bei gleichzeitig hoher Leistung. Diese Ausgestaltung ist vorteilhaft hinsichtlich einer Bauraumeinsparung. Weiter bevorzugt kann sein, dass der Stator einen, insbesondere plattenförmigen, Statorsockel und mehrere, insbesondere in axialer Richtung, von dem Statorsockel abstehende Statorzähne aufweist. Besonders bevorzugt kann sein, dass zumindest mittelbar oder unmittelbar um einen, insbesondere um jeden, Statorzahn eine Spule gewickelt ist.

Die elektrische Maschine, auch die Axialflussmaschine kann als Motor und/oder Generator ausgebildet sein. Als Motor kann die Axialflussmaschine aus elektrischer Energie eine Drehbewegung, insbesondere ein Drehmoment, erzeugen. Als Generator kann die Axialflussmaschine aus einer Drehbewegung, insbesondere aus einem Drehmoment, elektrische Energie erzeugen.

Bei der Axialflussmaschine wird der magnetische Fluss hauptsächlich parallel zu der Maschinenachse der elektrischen Maschine gebildet. Die Axialflussmaschine weist eine im Vergleich zu anderen Maschinentypen geringe axiale Baulänge auf. Unter der axialen Baulänge wird eine Baulänge in einer zu der Maschinenachse parallelen Richtung verstanden. Die Verwendung einer Axialflussmaschine ermöglicht daher eine Reduktion der Abmessungen der elektrischen Maschine in axialer Richtung. Hierdurch kann eine kompakte Ausgestaltung des Motor-Getriebe-Moduls ermöglicht werden. Insbesondere kann es sich bei der Axialflussmaschine um eine bürstenlose Gleichstrommaschine, insbesondere eine sogenannte BLDC-Maschine, handeln. Eine derartige Maschine ist wie eine Drehstrom-Synchronmaschine mit Erregung durch Permanentmagnete aufgebaut.

Mit der Maschinenachse ist die Drehachse gemeint, um welche sich ein Rotor der elektrischen Maschine dreht.

Insbesondere kann die elektrische Maschine, insbesondere als Motor, ein Verhältnis aus dem maximalen Drehmoment zu der axialen Erstreckung der Maschine aufweisen, das größer ist als 30 Nm/m, bevorzugt größer ist als 100 Nm/m, besonders bevorzugt größer ist als 200 Nm/m. Mit der axialen Erstreckung ist dabei die Erstreckung der Maschine parallel zur Maschinenachse gemeint. Insbesondere kann dieses Verhältnis größer als 50 Nm/m, bevorzugt größer als 70 Nm/m, besonders bevorzugt größer als 150 Nm/m, sein. Insbesondere kann die elektrische Maschine eine Drehmomentdichte, also Drehmoment zu Motorvolumen, von größer oder gleich 6000 Nm/m^3, bevorzugt von größer oder gleich 15000 Nm/m^3 und besonders bevorzugt von größer oder gleich 20000 Nm/m^3 und/oder eine Drehmomentkonstante von größer oder gleich 0,1 Nm/A, bevorzugt von größer oder gleich 0,2 Nm/A und besonders bevorzugt von größer oder gleich 0,3 Nm/A aufweisen. Diese Ausgestaltungen der elektrischen Maschine ermöglichen einen kompakten Aufbau des Getriebes und derart kleine Übersetzungsverhältnisse, wobei dennoch ein zuverlässiges, insbesondere unterstütztes Öffnen und/oder ein zuverlässiges Schließen des Flügels ermöglicht wird. Die Antriebseinrichtung baut insgesamt kompakt.

Insbesondere kann die elektrische Maschine in der Ausgestaltung als Axialflussmaschine ein Verhältnis zwischen der Erstreckung zumindest eines Statorzahns in axialer Richtung der elektrischen Maschine als Dividend und der Erstreckung des Statorsockels in axialer Richtung der elektrischen Maschine aufweisen, wobei das Verhältnis größer oder gleich 2, insbesondere größer oder gleich 3, insbesondere größer oder gleich 4, insbesondere größer oder gleich 5, insbesondere größer oder gleich 6 sein.

Mit dem Begriff der Spule ist ein elektrischer Leiter mit zumindest einer Wicklung gemeint. Der elektrische Leiter kann dabei als, insbesondere mittels einer Beschichtung, bevorzugt mittels eines Isolierlacks, isolierter Draht und/oder isoliertes Band ausgeführt sein. Hierzu kann der Leiter eine Isolierbeschichtung, insbesondere einen Isolierlack, aufweisen. Insbesondere kann die Spule als vergossene Spule ausgebildet sein, wobei einzelne Wicklungen der Spule mittels eines Vergussmaterials voneinander elektrisch isoliert sind.

Insbesondere kann der Stator eine oder mehrere Spulen, bevorzugt 7 bis 16, besonders bevorzugt 10 bis 14 Spulen aufweisen, wobei die Spule oder die Spulen des Stators derart angeordnet sind, dass durch die Spule oder die Spulen ein magnetischer Fluss in einer Richtung parallel zu der Maschinenachse erzeugbar ist.

Insbesondere kann in einem Bauraum zwischen dem Statorsockel und dem Rotor eine Platine angeordnet sein. Insbesondere kann zumindest eine, insbesondere jede, der Spulen, mit der Platine elektrisch verbunden sein. Insbesondere kann die Spule mit der Platine verlötet sein. Insbesondere kann dabei zumindest eine, insbesondere jede, Spule in oder auf der Platine integriert, insbesondere in dem Material der Platine, angeordnet sein.

Eine Platine ist im Sinne der Erfindung ein plattenförmiges, insbesondere bestücktes, Element zur Leitung von elektrischer Energie. Die Platine kann als Leiterkarte ausgebildet sein. Die Begriffe werden im Folgenden synonym verwendet. Die Platine kann mehrere Schichten umfassen und/oder Kunststoff aufweisen und/oder flexibel ausgeführt sein. Insbesondere kann die Platine als massive Aluminiumleiterkarte ausgeführt sein. Diese Ausgestaltung ist hinsichtlich guter Wärmeleitungseigenschaften vorteilhaft.

Insbesondere kann sich die Leiterkarte dabei zumindest teilweise über einen Bauraum erstrecken, der von einer in axialer Richtung der elektrischen Maschine verlängerten Mantelfläche des Stators und/oder von einer in axialer Richtung der elektrischen Maschine verlängerten Mantelfläche des Rotors begrenzt wird.

Insbesondere kann die Platine parallel zu dem Statorsockel angeordnet sein.

Insbesondere kann der Stator den, insbesondere plattenförmigen, Statorsockel und mehrere von dem Statorsockel in axialer Richtung der Maschine abstehende Statorzähne aufweisen, wobei die Platine in einer ersten, insbesondere zu dem Statorsockel parallelen, Ebene angeordnet ist, wobei die erste Ebene in einem Zwischenraum zwischen den Statorzähnen und dem Rotor liegt. Insbesondere kann die Platine auf den Statorzähnen aufliegen.

Insbesondere kann die Platine in einem Luftspalt zwischen Stator und Rotor angeordnet sein.

Insbesondere kann der Stator mehrere von dem Statorsockel in axialer Richtung der elektrischen Maschine abstehende Statorzähne aufweisen, wobei die Platine in einer zweiten, insbesondere zu dem Statorsockel parallelen, Ebene angeordnet ist, wobei die zweite Ebene von zumindest einem, insbesondere jedem Statorzahn, des Stators durchbrochen wird.

Diese Ausgestaltung ist vorteilhaft hinsichtlich einer weiteren Baumeinsparung in axialer Richtung.

Insbesondere können die Statorzähne dabei von einer gemeinsamen Oberfläche des Statorsockels abstehen. Insbesondere kann der Statorsockel mit zumindest einem, insbesondere jedem, Statorzahn formschlüssig und/oder kraftschlüssig und/oder stoffschlüssig verbunden sein oder einstückig ausgebildet sein.

Insbesondere kann die Platine einen oder mehrere Durchbrüche, insbesondere der Anzahl der Statorzähne entsprechende Anzahl von Durchbrüchen, aufweisen, welche von den Statorzähnen durchgriffen werden.

Dabei kann die Form der jeweiligen Durchbrüche der Fläche der jeweiligen Zähne parallel zur Platine entsprechen. Insbesondere kann die Platine einen einzelnen Durchbruch für mehrere oder alle Zähne umfassen.

Insbesondere kann der Rotor zumindest einen Permanentmagnet umfassen, wobei der Permanentmagnet entlang eines virtuellen Kreises um die Maschinenachse angeordnet ist und einen ersten Winkelbereich aufspannt. Insbesondere kann der Stator den Statorsockel mit zumindest einem von dem Statorsockel, insbesondere in axialer Richtung der Axialflussmaschine, abstehenden Statorzahn umfassen, wobei der Statorzahn entlang eines virtuellen Kreises um die Maschinenachse angeordnet ist und einen zweiten Winkelbereich aufspannt, wobei das Verhältnis des ersten Winkelbereichs als Dividend zu dem zweiten Winkelbereich im Bereich von 1,1 bis 1,6, bevorzugt im Bereich von 1,2 bis 1,5, besonders bevorzugt im Bereich von 1,3 bis 1,4, liegt. Bei mehreren Zähnen und/oder Magneten kann jeder Zahn zu jedem Magneten das oben genannte Verhältnis aufweisen. Alternativ oder kumulativ kann bei mehreren Magneten und Zähnen ein summierter Bereich also ein Verhältnis in einem Bereich von 1,3 bis 1,9 oder sogar von 1,5 bis 1,8 liegen.

Der Begriff Kreis um Maschinenachse bedeutet, dass die Maschinenachse den Mittelpunkt des Kreises bildet.

Dabei kann eine parallel zum Statorsockel verlaufende Fläche des Statorzahns, insbesondere jeden Statorzahns, derart ausgeführt sein, dass sich die Fläche in radialer Richtung des Stators ausgehend von der Maschinenachse erweitert. Alternativ oder kumulativ kann eine parallel zum Statorsockel verlaufende Fläche des Permanentmagnets, insbesondere jedes Permanentmagnets, derart ausgeführt sein, dass sich die Fläche in radialer Richtung des Rotors ausgehend von der Maschinenachse erweitert. Auf diese Weise können das angegebene Verhältnis des ersten Winkelbereichs als Dividend zu dem zweiten Winkelbereich entlang des radialen Verlaufes des Stators konstant gehalten werden. Insbesondere kann die parallel zum Statorsockel verlaufende Fläche des Statorzahns, insbesondere jeden Statorzahns, entlang des axialen Verlaufes des Statorzahns konstant bleiben.

Insbesondere kann zumindest ein, insbesondere jeder, Permanentmagnet plattenförmig ausgebildet sein. Insbesondere kann der Rotor eine Rotorplatte, insbesondere Rotorscheibe aufweisen. Ferner kann zumindest ein, insbesondere jeder, Permanentmagnet von der Rotorplatte des Rotors in axialer Richtung der Maschine, insbesondere in Richtung zu dem Stator, abstehen. Insbesondere kann die Rotorplatte eine oder mehrere Vertiefungen, insbesondere eine der Anzahl der Permanentmagneten entsprechende Anzahl an Vertiefungen, aufweisen, wobei in jeweils einer Vertiefung ein Permanentmagnet einliegt. Insbesondere kann dabei die Form der Vertiefung, insbesondere jeder Vertiefung, der Form des einliegenden Permanentmagneten entsprechen. Dies dient zur Sicherung der Permanentmagnete auf dem Rotor, insbesondere auf der Rotorplatte.

Insbesondere kann das Verhältnis zwischen der Anzahl der Permanentmagnete als Dividend und der Anzahl der Wicklungen in einem Bereich von 1,0 bis 1,6, bevorzugt in einem Bereich von 1,2 bis 1,4 liegt, besonders bevorzugt 4/3, insbesondere 1,1; insbesondere 7/6 sein

Insbesondere kann der Statorsockel eine Lageraufnahme zur Aufnahme eines Wälzlagers oder eines Gleitlagers aufweisen. Insbesondere kann die Lageraufnahme an einem mit dem Stator formschlüssig und/oder kraftschlüssig und/oder stoffschlüssig verbundenen oder einstückig ausgebildeten, feststehenden Bolzen angeordnet sein.

Diese Ausgestaltung ist vorteilhaft hinsichtlich einer kompakten Bauweise in axialer Richtung.

Insbesondere kann die Lageraufnahme eine, insbesondere ringförmige, Lagerauflagefläche aufweisen, die formschlüssig und/oder kraftschlüssig und/oder stoffschlüssig mit dem Statorsockel verbunden ist oder einstückig mit dem Statorsockel ausgebildet ist.

Die Lagerauflagefläche bezeichnet eine Fläche, auf oder an der das Lager anliegen kann.

Insbesondere kann die Lageraufnahme zylindrisch, insbesondere hohlzylindrisch, ausgebildet sein.

Insbesondere kann der Stator einen feststehenden Bolzen aufweisen, wobei der Bolzen formschlüssig und/oder kraftschlüssig und/oder stoffschlüssig mit dem Stator verbunden oder einstückig ausgebildet ist und die Lageraufnahme umfasst.

Insbesondere kann die Antriebseinrichtung ein Motor-Getriebe-Modul aufweisen, das eine elektrische Maschine aufweist, wobei die elektrische Maschine den, insbesondere einzigen, Stator und den, insbesondere einzigen, um eine Maschinenachse drehbaren Rotor aufweist. Die Antriebseirichtung weist auch ein Getriebe auf, wobei die Antriebseinrichtung eine um eine Abtriebsachse drehbare Abtriebswelle aufweist. Insbesondere kann das Getriebe ein Übersetzungsverhältnis als Quotient aus der Drehzahl des Rotors als Dividend und der Drehzahl der Abtriebswelle aufweisen, wobei das Übersetzungsverhältnis kleiner ist als 125, bevorzugt kleiner ist als 100, besonders bevorzugt kleiner ist als 75.

Durch die Wahl des Übersetzungsverhältnisses des Getriebes, welches kleiner ist als 125, bevorzugt kleiner ist als 100, besonders bevorzugt kleiner ist als 75, wird ein kompakter Aufbau des Getriebes ermöglicht, so dass die Antriebseinrichtung insgesamt kompakt baut, wobei aber auch eine Reibungsreduktion erreicht wird. Auch die Effizienz des Getriebes kann dadurch erhöht werden, da bei kleinen Übersetzungsverhältnissen Energieverluste reduziert werden können.

Insbesondere kann das Motor-Getriebe-Modul ein Motor-Getriebe-Gehäuse aufweisen. Insbesondere kann die elektrische Maschine vollständig innerhalb des Motor-Getriebe-Gehäuses angeordnet sein. Insbesondere kann die Abtriebswelle zumindest teilweise, bevorzugt vollständig, innerhalb des Motor-Getriebe-Gehäuses angeordnet sein.

Insbesondere kann die Antriebseinrichtung bei einem Drehflügeltürantrieb oder bei einem Schiebertürantrieb oder bei einem Karusselltürantrieb einsetzbar sein.

Bei einem Drehflügelantrieb wird ein Flügel von einer Schließstellung, in der der Flügel an einem Rahmen oder einer Zarge anliegt, zu einer Offenstellung um eine Flügelachse mittels der Antriebseinrichtung verschwenkt, wobei das Drehmoment mittels eines Hebels von der Abtriebswelle der Antriebseinrichtung auf die Tür oder auf die Zarge übertragen wird. Die Antriebseinrichtung kann dabei am Flügel, wobei eine Laufschiene an der Zarge angeordnet werden kann, oder an der Zarge, wobei an dem Flügel eine Laufschiene angeordnet sein kann, montiert werden. Der Drehflügelantrieb kann dabei neben der Antriebseinrichtung auch den Hebel und/oder die Laufschiene und/oder den Flügel umfassen. Insbesondere beim Einsatz an Brandschutzflügeln kann die Antriebseinrichtung dabei ein Schließer-Modul aufweisen. Im Brandfalle ist mittels des Schließer-Moduls ein Schließen des Brandschutzflügels, insbesondere frei von manueller Betätigung sichergestellt.

Bei einem Schiebetürantrieb wird ein Flügel mittels der Antriebseinrichtung translatorisch entlang einer Laufschiene verschoben, wobei der Flügel mit einem in der Lauschiene laufenden Laufwagen verbunden werden kann. Der Schiebetürantrieb kann neben der Antriebseinrichtung den Flügel und/oder die Laufschiene und/oder den Laufwagen aufweisen.

Bei einem Karusseltürantrieb werden zwei oder mehr an einer vertikalen Mittelachse angebrachte Türflügel, die in einem runden Drehgehäuse rotieren, mittels der Antriebseinrichtung gedreht. Der Karusseltürantrieb kann neben der Antriebseinrichtung das Drehgehäuse und/oder die Flügel aufweisen.

Mit den Begriffen -achse, Flügelachse und Abtriebsachse sind virtuelle Achsen, insbesondere auch Drehachsen, gemeint, die in ihrer Erstreckung grundsätzlich nicht begrenzt sind. Mit der Maschinenachse ist die Drehachse gemeint, um welche sich der Rotor der elektrischen Maschine dreht.

Insbesondere kann ein Steuerungsmodul in oder an dem Schließer-Modul angeordnet sein.

Insbesondere können das Motor-Getriebe-Modul und/oder das Schließer-Modul und/oder das Steuerungsmodul zumindest teilweise, insbesondere vollständig, innerhalb einer übergeordneten Verkleidung, also innerhalb eines übergeordneten Gehäuses angeordnet sein. Die Begriffe übergeordnetes Gehäuse und übergeordnete Verkleidung werden im Folgenden synonym verwendet.

Insbesondere kann das Steuerungsmodul ein Steuerungsgehäuse aufweisen. Das Steuerungsmodul kann vollständig innerhalb des Steuerungsgehäuses angeordnet sein. Insbesondere kann das Steuerungsgehäuse mit dem übergeordneten Gehäuse und/oder mit dem Motor-Getriebe-Gehäuse und/oder mit dem Schließer-Gehäuse kraftschlüssig und/oder formschlüssig und/oder stoffschlüssig verbunden sein. Insbesondere kann eine oder mehrere derartige Verbindungen in Form zumindest einer Verschraubung und/oder einer Verstiftung und/oder einer Presspassung und/oder einer T-Nut und/oder einer Schnappverbindung ausgeführt sein.

Insbesondere kann die Antriebseinrichtung, bevorzugt die elektrische Maschine und/oder das Getriebe und/oder der Energiespeicher, derart ausgelegt werden, dass mittels der Antriebseinrichtung, insbesondere mittels eines Maschinenmoments, eine Bewegung des Flügels ohne eine durch eine Person ausgeübte manuelle Kraft, insbesondere ohne ein durch eine Person ausgeübtes manuelles Drehmoment, auf den Flügel, insbesondere vollautomatisiert, erfolgen kann. Dabei kann jedoch die Bewegung des Flügels durch die durch die Person ausgeübte manuelle Kraft, insbesondere das manuelle Drehmoment, auf den Flügel beschleunigt erfolgen.

Von der Bewegung des Flügels ist hierbei eine Öffnungsbewegung und/oder eine Schließbewegung des Flügels gemeint.

Alternativ kann dabei die Antriebseinrichtung, bevorzugt die elektrische Maschine und/oder das Getriebe und/oder der Energiespeicher, als Hilfsantrieb derart ausgelegt werden, dass eine Bewegung des Flügels nur dann durchgeführt wird, wenn zumindest in einem Zeitpunkt der Bewegung des Flügels, insbesondere an einem Anfang der Bewegung, zusätzlich zu einer mittels der Antriebseinrichtung erzeugten Kraft, insbesondere eines Maschinenmoments, auf den Flügel eine durch eine Person ausgeübte manuelle Kraft, insbesondere ein durch eine Person ausgeübtes manuelles Drehmoment, auf den Flügel ausgeübt wird.

Insbesondere das Motor-Getriebe-Gehäuse und das Schließer-Gehäuse können jeweils quaderförmig ausgebildet sein. Hierbei kann das Motor-Getriebe-Gehäuse und/oder das Schließer-Gehäuse quaderförmig, d.h. mit vier angrenzenden Wänden, ausgebildet sein, wobei die angrenzenden Wände orthogonal zueinander stehen, um die beidseitige Montierbarkeit zu ermöglichen. Auf diese Weise ist die Antriebseinrichtung beidseitig montierbar.

Weitere Einzelheiten und Vorteile der Erfindung sollen nachfolgend anhand der in den Figuren gezeigten Ausführungsbeispiele erläutert werden. Hierin zeigt:
- Fig. 1: ein Ausführungsbeispiel einer Antriebseinrichtung gemäß der Erfindung in einer schematischen Schnittdarstellung;
- Fig. 2: die Antriebseinrichtung aus Figur 1 als Einzelheit in einer perspektivischen Ansicht;
- Fig. 3: ein Übersetzungselement mit einem Schließer-Rad in einer Aufsicht,
- Fig. 4: ein weiteres Ausführungsbeispiel einer Antriebseinrichtung mit Planetengetriebe,
- Fig. 5: die Antriebseinrichtung aus Figur 4 mit entferntem Hohlrad, und
- Fig. 6: eine Axialflussmaschine in prinzipieller Darstellung im Schnitt.

In den unterschiedlichen Figuren sind gleiche Teile stets mit denselben Bezugszeichen versehen, weswegen diese in der Regel auch nur einmal beschrieben werden.

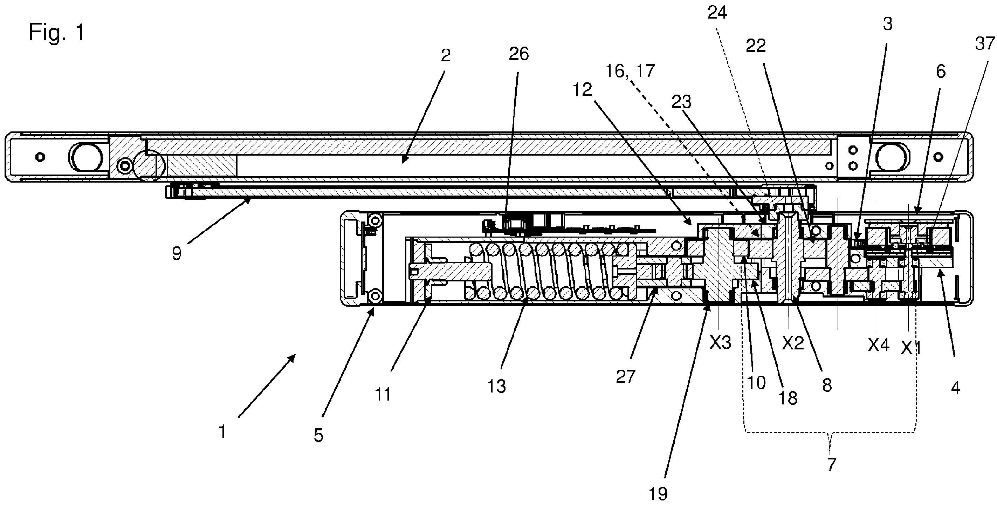

Figur 1 zeigt eine Antriebseinrichtung 1 zum Bewegen eines Flügels, insbesondere eines Türflügels oder eines Fensterflügels.

Die Antriebseinrichtung 1 weist ein Motor-Getriebe-Modul 3 auf, das ein Motor-Getriebe-Gehäuse 4, eine elektrische Maschine 6 mit einer Maschinenachse X1, ein Getriebe 7 mit einer um eine Abtriebsachse X2 drehbar gelagerten Abtriebswelle 8 zur Verbindung mit einem Hebel 9 aufweist. Die Antriebseinrichtung 1 weist auch ein Schließer-Modul 11 auf, das ein Schließer-Gehäuse 12 sowie einen mechanischen Energiespeicher 13 aufweist. Die Antriebseinrichtung 1 weist ein Schnittstellenelement zur Ausbildung einer Wirkverbindung zwischen dem Motor-Getriebe-Modul 3 und dem Schließer-Modul 11 auf.

Das Getriebe 7 weist ein Übersetzungsverhältnis als Quotient aus der Drehzahl des Rotors als Dividend und der Drehzahl der Abtriebswelle auf, wobei das Übersetzungsverhältnis kleiner ist als 125, bevorzugt kleiner ist als 100, besonders bevorzugt kleiner ist als 75 auf.

Dabei dient der Hebel 9 zur Ausbildung einer Verbindung der Antriebseinrichtung 1 mit dem Flügel, also mit dem beispielhaften Türflügel oder Fensterflügel oder mit einer Zarge, wobei die Antriebseinrichtung 1 wahlweise an der Zarge oder an dem Flügel montierbar ist. Von dem Begriff Zarge wird im Sinne der Erfindung auch ein Türrahmen oder Fensterrahmen umfasst. Insbesondere kann der Hebel 9 derart ausgebildet sein, dass eine Spannungsversorgung der elektrischen Maschine 6 und/oder zumindest ein Steuerungssignal für die elektrische Maschine 6 über den Hebel 9 an das Motor-Getriebe-Modul 3, insbesondere an die elektrische Maschine 6 und/oder an das Steuerungsmodul 26 übertragbar sind. Der Hebel 9 ist in einer Laufschiene 2 geführt, welche in dem dargestellten Ausführungsbeispiel an einer nicht dargestellten Zarge montiert wäre.

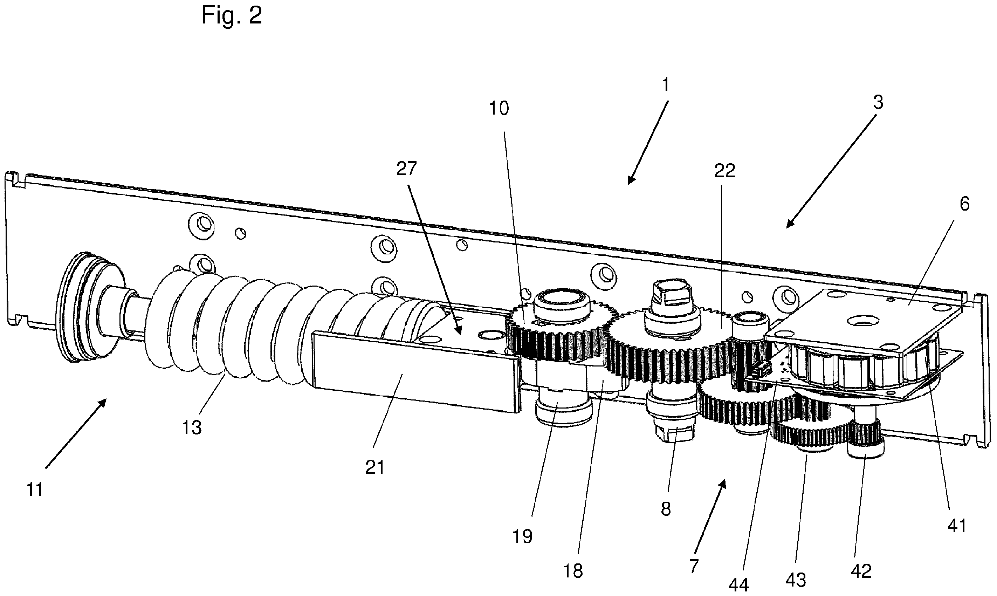

Wie in den Figur 1 und 2 deutlich zu erkennen ist, ist die Abtriebswelle 8 in einem Bauraum zwischen der Maschinenachse X1 der elektrischen Maschine 6 und dem Energiespeicher 13 angeordnet.

Das Motor-Getriebe-Gehäuse 4 weist eine erste Öffnung 16 auf, wobei das Schließer-Gehäuse 12 eine zweite Öffnung 17 aufweist. Wie in Figur 1 erkennbar ist, sind das Motor-Getriebe-Gehäuse 4 und das Schließer-Gehäuse 12 derart zueinander angeordnet, dass durch die erste Öffnung 16 und die zweite Öffnung 17 das Schließer-Modul 11, insbesondere der Energiespeicher 13, und das Getriebe 7, insbesondere die Abtriebswelle 8, mittels des Schnittstellenelements miteinander in Wirkverbindung stehen.

Das Motor-Getriebe-Modul 3 und/oder das Schließer-Modul 11 ist jeweils zumindest teilweise, insbesondere vollständig, innerhalb eines übergeordneten Gehäuses 5 angeordnet. Das Motor-Getriebe-Gehäuse 4 ist mit dem übergeordneten Gehäuse 5 und/oder mit dem Schließer-Gehäuse 12 kraftschlüssig und/oder formschlüssig und/oder stoffschlüssig verbunden. Das Schließer-Gehäuse 12 ist mit dem übergeordneten Gehäuse 5 kraftschlüssig und/oder formschlüssig und/oder stoffschlüssig verbunden. Eine oder mehrere derartige Verbindungen sind beispielhaft in Form zumindest einer Verschraubung ausgeführt.

In den Figuren 1 und 2 ist erkennbar, dass die Abtriesachse X2 parallel zu der Maschinenachse X1 ist.

Das Schließer-Modul 11 weist ein Übersetzungselement 18 zur Übersetzung einer linearen Bewegung des Energiespeichers 13 in eine Drehbewegung des Übersetzungselements 18 um eine Drehachse X3 des Übersetzungselements 18 auf. Wie beispielhaft in Figur 1 erkennbar sind die Abtriebsachse X2 und die Drehachse X3 des Übersetzungselements 18 beabstandet voneinander und verlaufen parallel zueinander. Das Übersetzungselement 18 ist als Kurvenscheibe und zwar als herzförmige Hubkurvenscheibe ausgebildet und drehfest mit einem Schließer-Rad 10 drehbar gelagert.

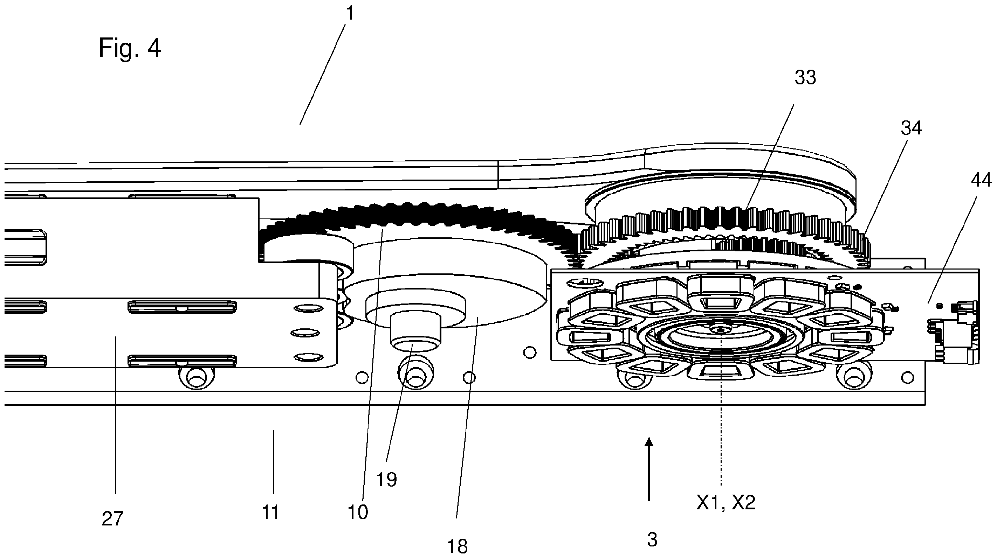

Beispielhaft ist der mechanische Energiespeicher 13 als Druckfeder ausgeführt. Die Druckfeder ist über einen Laschenwagen 27 mit dem Übersetzungselement 18 zur Übersetzung der linearen Bewegung des mechanischen Energiespeichers 13 in eine Drehbewegung des Übersetzungselements 18 verbunden. Der Laschenwagen 27 weist Gleitelemente 21 auf, die in Figur 2 erkennbar sind. Der Laschenwagen 27 ist in Figur 4 erkennbar.

Das Schließer-Rad 10 ist koaxial und drehfest zu dem Übersetzungselement 18 zur Übersetzung der linearen Bewegung des Energiespeichers 13 in eine Drehbewegung des Übersetzungselements 18 angeordnet.

Das Getriebe 7 weist ein mit der Abtriebswelle 8 koaxiales und drehfestes Abtriebsrad 22, insbesondere Abtriebszahnrad auf, wobei das Abtriebsrad 22 in Eingriff mit dem Schließer-Rad 10 steht.

Das Schnittstelleelement ist in dem Ausführungsbeispiel zu den Figuren 1 und 2 von dem Abtriebsrad 22 gebildet.

Beispielhaft weist das Motor-Getriebe-Gehäuse 4 eine erste Wand 23 mit einer Abtriebsöffnung 24 zur insbesondere drehfesten Verbindung der Abtriebswelle 8 mit dem Hebel 9, eine zweite an die erste Wand 23 angrenzende Wand und eine dritte der zweiten Wand gegenüberliegende Wand auf, wobei die Antriebseinrichtung 1 derart ausgebildet ist, sowohl mit der zweiten Wand als auch mit der dritten Wand zugewandt zu dem Flügel, also zu dem beispielhaften Türflügel befestigt zu werden. Gleiches kann für das Schließer-Gehäuse 12 gelten. Das Motor-Getriebe-Gehäuse 4 aber auch das Schließer-Gehäuse 12 können jeweils quaderförmig ausgebildet sein, um die beidseitige Montierbarkeit zu ermöglichen.

In Figur 1 ist noch das Steuerungsmodul 26 erkennbar, das eine Steuerungseinrichtung aufweist. Das Steuerungsmodul 26 ist vollständig, innerhalb des übergeordneten Gehäuses 5 der Antriebseinrichtung 1 angeordnet ist.

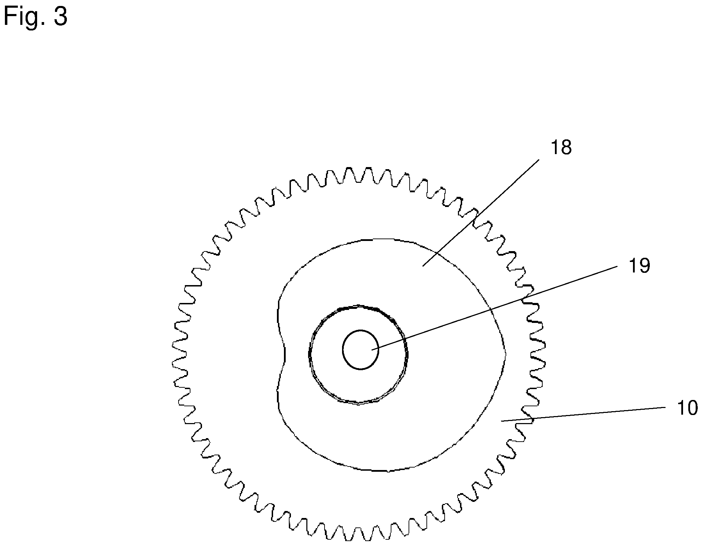

Figur 3 zeigt eine besondere Ausführungsform, wobei das Übersetzungselement 18 als Kurvenscheibe, und zwar als herzförmige Hubkurvenscheibe ausgebildet ist. Wie in Figur 3 ferner erkennbar ist, ist ein fixierter Achskörper 19 angeordnet, wobei das Übersetzungselement 18 und das Schließer-Rad 10 an dem Achskörper 19 drehbar gelagert sind.

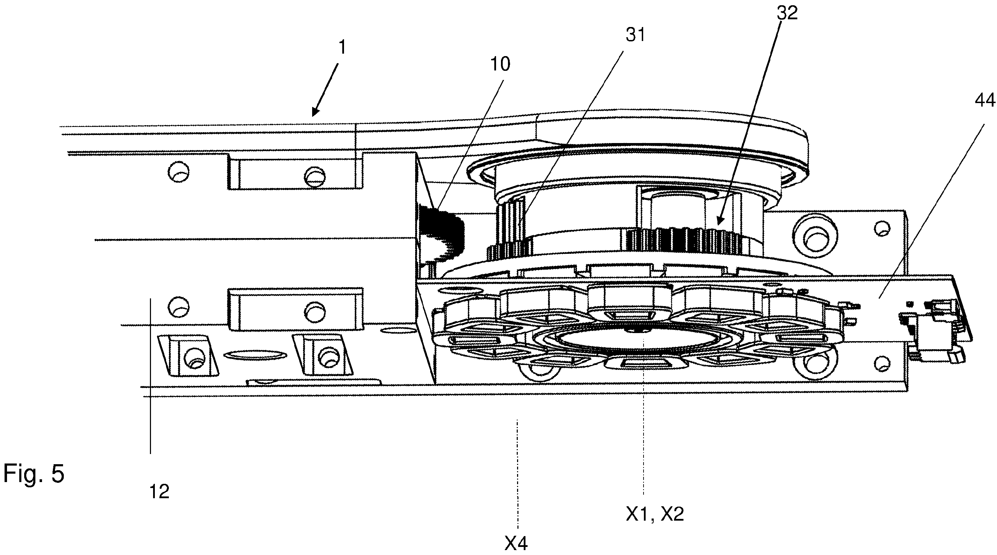

In den Figuren 4 und 5 ist die Antriebseinrichtung 1 in einer weiteren Ausgestaltung dargestellt, wobei das Getriebe 7 im Unterschied zu dem Ausführungsbeispiel zu den Figuren 1 und 2 als Planetengetriebe ausgeführt ist. Die Begriffe Planet und Planetenrad werden synonym verwendet.

Als Planetengetriebe weist das Getriebe 7 eine Wolfromstufe auf. Eine derartige Wolfromstufe weist eine erste Getriebestufe und eine zweite Getriebestufe auf. Die erste Getriebestufe umfasst ein Sonnenrad, mehrere erste an einem Planetenträger befestigte, von dem Sonnenrad angetriebenen Planeten 32 und ein erstes, feststehendes Hohlrad auf. Das Sonnenrad und das erste feststehende Hohlrad sind in den Figuren 4 und 5 aufgrund der gewählten Ansicht nicht erkennbar. Die zweite Getriebestufe umfasst ein zweites drehbares Hohlrad 33, zweite mit den ersten Planeten 32 drehfeste Planeten 31. Die zweiten Planeten 31 treiben das zweite Hohlrad 33 an. Das zweite Hohlrad 33 bildet dabei den Leistungsausgang des Planetengetriebes. In Figur 5 ist das zweite Hohlrad entfernt.

Das Getriebe 7 gemäß dem Ausführungsbeispiel zu den Figuren 4 und 5 ist als eine Kombination aus Planetengetriebe und Stirnradgetriebe ausgebildet. Dabei weist das zweite Hohlrad 33 des Planetengetriebes eine Außenverzahnung 34 auf und agiert als Stirnrad. Das Hohlrad 33 steht in Eingriff mit dem Schließer-Rad 10 des Schließer-Moduls 11. Das Schließer-Rad 10 bildet in dem Ausführungsbeispiel zu den Figuren 4 und 5 das Schnittstellenelement.

Bei dem Ausführungsbeispiel zu den Figuren 4 und 5 ist die Abtriebsachse X2 koaxial zur Maschinenachse X1.

Bei den beschriebenen Ausführungsbeispielen ist die elektrische Maschine 6 jeweils als Axialflussmaschine ausgeführt.

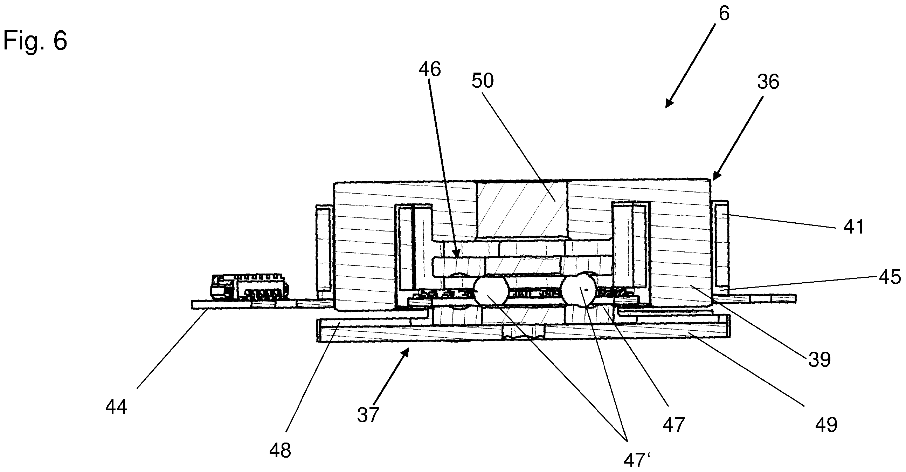

Die elektrische Maschine 6 ist als Einzelheit in Figur 6 prinzipiell dargestellt. Die elektrische Maschine 6 weist einen Stator 36 und einen Rotor 37 auf. Der Stator 36 weist einen plattenförmigen Statorsockel 38 und mehrere von dem Statorsockel 38 in axialer Richtung der elektrischen Maschine 6 abstehende Statorzähne 39 auf. Dabei ist um jeden der Statorzähne 39 jeweils eine Spule 41 angeordnet. Jeder Statorzahn 39 weist einen elektrisch isolierenden Zahnmantel 45 auf, wobei der Stator 36 mehrere Spulen 41 aufweist und jede der Spulen 41 um den Zahnmantel 45 und daher mittelbar über den Zahnmantel 45 um den Statorzahn 39 gewickelt ist. Die Statorzähne 39 durchgreifen dabei eine Platine 44, an welcher die Spulen 41 kontaktiert sind.

In Figur 6 ist erkennbar, dass der Stator 36 ferner einen feststehenden Bolzen 50 umfasst, wobei der Bolzen 50 eine Lageraufnahme 46 zur Aufnahme eines Wälzlagers 47 aufweist. Beispielhaft ist in Figur 6 ein Wälzlager 47 mit Kugeln 47' dargestellt. Die Antriebseinrichtung 1 umfasst das Wälzlager 47, zur drehbaren Lagerung des Rotors 37 gegenüber dem Stator 36, wobei das Wälzlager 47 an der Lageraufnahme 46 des Bolzens 50 aufgenommen ist. Der Rotor 37 ist mittels des Wälzlagers 47 an dem Stator 36 drehbar gelagert. In einer nicht dargestellten Ausführungsform, kann eine Lageraufahme direkt am Statorsockel vorgesehen sein, an welcher ein Wälzlager aufgenommen sein kann. Der Rotor 37 umfasst mehrere Permanentmagnete 48. Jeder Permanentmagnet 48 ist plattenförmig ausgebildet. Der Rotor 37 weist eine Rotorplatte 49 in Form einer Rotorscheibe auf. Ferner steht jeder Permanentmagnet 48 von der Rotorplatte 49 des Rotors 37 in axialer Richtung der elektrischen Maschine, insbesondere in Richtung zu dem Stator 36, ab.

Wie den Figuren 1 und 2 zu entnehmen ist, weist das Getriebe 7 ein erstes koaxial mit der Maschinenachse X1 drehbares Getriebeelement 42 auf, welches insbesondere drehfest mit dem Rotor 37 verbunden ist. Das Getriebe 7 weist weiter ein zweites Getriebeelement 43 auf, welches mit dem ersten Getriebeelement 42 wirkverbunden ist, wobei eine Drehachse X4 des zweiten Getriebeelements 43 in einem Bauraum zwischen der Maschinenachse X1 und einer virtuell in axialer Richtung der elektrischen Maschine 6 verlängerten äußeren Mantelfläche des Rotors 37 oder einer virtuell in axialer Richtung der elektrischen Maschine 6 verlängerten äußere Mantelfläche des Stators 36, insbesondere parallel zu der Maschinenachse X1, verläuft.

Bei dem Ausführungsbeispiel zu den Figuren 4 und 5 ist das erste Getriebeelement 42 als Sonnenrad 29 und das zweites Getriebeelement 43 als Planetenrad 32 ausgebildet. Das Sonnenrad 29 ist drehfest mit dem Rotor 37 verbunden. Die Drehachse X4 des zweiten Getriebeelements 43 verläuft in einem Bauraum zwischen der Maschinenachse X1 und einer virtuell in axialer Richtung der elektrischen Maschine 6 verlängerten äußeren Mantelfläche des Rotors 37 oder einer virtuell in axialer Richtung der elektrischen Maschine 6 verlängerten äußere Mantelfläche des Stators 36, insbesondere parallel zu der Maschinenachse X1.

In den Figuren 2 sowie 4 und 5 ist zudem noch eine Platine 44 erkennbar, die in dem Bauraum zwischen dem Statorsockel 38 und dem Rotor 37 angeordnet ist.

### Bezugszeichenliste:

- 1: Antriebseinrichtung
- 2: Laufschiene
- 3: Motor-Getriebe-Modul
- 4: Motor-Getriebe-Gehäuse
- 5: übergeordnetes Gehäuse
- 6: elektrische Maschine
- 7: Getriebe
- 8: Abtriebswelle
- 9: Hebel
- 10: Schließer-Rad
- 11: Schließer- Modul
- 12: Schließer- Gehäuse
- 13: mechanischer Energiespeicher
- 16: erste Öffnung in 4
- 17: zweite Öffnung in 12
- 18: Übersetzungselement
- 19: Achskörper
- 21: Gleitelemente
- 22: Abtriebsrad von 7
- 23: erste Wand von 4
- 24: Abtriebsöffnung
- 26: Steuerungsmodul
- 27: Laschenwagen
- 31: Planet
- 32: Planet
- 33: Hohlrad
- 34: Außenverzahnung
- 36: Stator
- 37: Rotor
- 38: Statorsockel
- 39: Statorzähne
- 41: Spule
- 42: erstes Getriebeelement
- 43: zweites Getriebeelement
- 44: Platine
- 45: Zahnmantel
- 46: Lageraufnahme
- 47: Wälzlager
- 47': Kugeln des Wälzlagers 47
- 48: Permanentmagnet
- 49: Rotorplatte
- 50: Bolzen

## Patentansprüche

1. Antriebseinrichtung (1) zum Bewegen eines Fensterflügels oder Türflügels, mit einer elektrischen Maschine (6) umfassend einen, insbesondere einzigen, Stator (36) und einen, insbesondere einzigen, um eine Maschinenachse (X1) drehbaren Rotor (37) und mit einem mit der elektrischen Maschine (3) gekoppelten Getriebe (7), wobei das Getriebe (7) ein erstes koaxial mit der Maschinenachse (X1) drehbares Getriebeelement (42) aufweist, insbesondere wobei das erste Getriebeelement (42) drehfest mit dem Rotor (37) verbunden ist, wobei das Getriebe (7) ein zweites Getriebeelement (43) aufweist, welches mit dem ersten Getriebeelement (42) wirkverbunden ist, wobei eine Drehachse (X4) des zweiten Getriebeelements (43) in einem Bauraum zwischen der Maschinenachse (X1) und einer virtuell in axialer Richtung der elektrischen Maschine (6) verlängerten äußeren Mantelfläche des Rotors (37) oder einer virtuell in axialer Richtung der elektrischen Maschine (6) verlängerte äußere Mantelfläche des Stators (36), insbesondere parallel zu der Maschinenachse (X1), verläuft, ferner aufweisend
eine um eine Abtriebsachse (X2) drehbare Abtriebswelle (8) zur drehfesten Verbindung mit einem Hebel (9), und
ein Schließer-Modul (11) aufweisend einen mechanischen Energiespeicher (13) und ein Übersetzungselement (18) zur Übersetzung einer linearen Bewegung des mechanischen Energiespeichers (13) in eine Drehbewegung des Übersetzungselements (18), wobei das Schließer-Modul (11) ein mit dem Energiespeicher (13) mittels des Übersetzungselements (18) wirkverbundenes Schließer-Zahnrad (10) umfasst, und
das Getriebe ein mit der Abtriebswelle (8) koaxiales und drehfestes Abtriebsrad (22) aufweist, **dadurch gekennzeichnet, dass** die Abtriebsachse (X2) parallel oder koaxial zu der Maschineachse (X1) verläuft, und dass
das Abtriebsrad (22) in Eingriff mit dem Schließer-Zahnrad (10) steht.

2. Antriebseinrichtung (1) nach Anspruch 1, **dadurch gekennzeichnet, dass** das erste Getriebeelement (42) und das zweite Getriebeelement (43) oder das gesamte Getriebe (7) vollständig in einem Bauraum angeordnet ist, wobei der Bauraum durch eine virtuell in axialer Richtung der elektrischen Maschine (6) verlängerte äußere Mantelfläche des Rotors (37) oder durch eine virtuell in axialer Richtung der elektrischen Maschine (6) verlängerte äußere Mantelfläche des Stators (36) begrenzt wird.

3. Antriebseinrichtung (1) nach einem der vorhergehenden Ansprüche, **gekennzeichnet durch** ein Maschinen-Gehäuse und/oder ein Getriebe-Gehäuse und/oder ein Motor-Getriebe-Gehäuse (4), bevorzugt, dass die elektrische Maschine (6) zumindest teilweise innerhalb des Maschinen-Gehäuses angeordnet ist, besonders bevorzugt, dass das Getriebe (7) zumindest teilweise innerhalb des Motor-Getriebe-Gehäuses (4) angeordnet ist.

4. Antriebseinrichtung (1) nach einem der vorhergehenden Ansprüche, **dadurch gekennzeichnet, dass** das Getriebe (7) als Zahnradgetriebe, insbesondere als Stirnradgetriebe und/oder Planetengetriebe, oder als Exzentergetriebe ausgebildet ist.

5. Antriebseinrichtung (1) nach einem der vorhergehenden Ansprüche, **dadurch gekennzeichnet, dass** das Getriebe (7) als Planetengetriebe ausgebildet ist, wobei das erste Getriebeelement (42) als Sonnenrad und zumindest ein zweites Getriebeelement (43) als Planetenrad (31) ausgebildet ist, bevorzugt, dass das Getriebe (7) zumindest eine Wolfromstufe aufweist.

6. Antriebseinrichtung (1) nach Anspruch 5, **dadurch gekennzeichnet, dass** das Getriebe (7) ein erstes Hohlrad umfasst, welches in Eingriff mit dem Planetenrad (32) steht, wobei das Planetenrad (32) an einem Planetenträger drehbar gelagert ist, wobei der Planetenträger an dem Sonnenrad oder an dem drehfest mit dem Sonnenrad verbundenen Rotor (37) drehbar gelagert ist.

7. Antriebseinrichtung (1) nach einem der vorhergehenden Ansprüche, **gekennzeichnet dadurch, dass** das Übersetzungselement (18) als Kurvenscheibe ausgebildet ist.

8. Antriebseinrichtung (1) nach Anspruch 7, **dadurch gekennzeichnet, dass** das Schließer-Rad (10) koaxial, insbesondere drehfest, zu dem Übersetzungselement (18) angeordnet ist, bevorzugt, dass das Übersetzungselement (18) und das Schließer-Rad (10) formschlüssig und/oder kraftschlüssig und/oder stoffschlüssig verbunden sind, besonders bevorzugt einstückig ausgebildet sind.

9. Antriebseinrichtung (1) nach Anspruch 7 oder 8, **dadurch gekennzeichnet, dass** das Getriebe (7) ein Übersetzungsverhältnis als Quotient aus der Drehzahl des Rotors (37) als Dividend und der Drehzahl des Schließer-Rads (10) oder der Drehzahl des Übersetzungselementes (18) kleiner als 125, bevorzugt kleiner als 100, besonders bevorzugt kleiner als 75, aufweist.

10. Antriebseinrichtung (1) nach einem der Ansprüche 7 bis 9, **gekennzeichnet durch** zumindest ein Schnittstellenelement zur Ausbildung einer Wirkverbindung zwischen der elektrischen Maschine und dem Schließer-Modul, insbesondere, dass das Schnittstellenelement zumindest ein Zahnrad umfasst.

11. Antriebseinrichtung (1) nach einem der Ansprüche 7 bis 10, **gekennzeichnet durch** ein Motor-Getriebe-Gehäuse (4) und ein Schließer-Gehäuse (12), wobei die elektrische Maschine (6) und das Getriebe (7) zumindest teilweise innerhalb des Motor-Getriebe-Gehäuses (4) angeordnet sind, wobei der Energiespeicher (13) innerhalb des Schließer-Gehäuses (12) angeordnet ist, wobei die elektrische Maschine (6) und der Energiespeicher (13) mittels des Schnittstellenelements in Wirkverbindung stehen, bevorzugt, dass das Schnittstellenelement durch eine erste Öffnung (16) des Motor-Getriebe-Gehäuses (4) in das Motor-Getriebe-Gehäuse (4) und/oder durch eine zweite Öffnung (17) des Schließer-Gehäuses (12) in das Schließer-Gehäuse (12) hineinragt.

12. Antriebseinrichtung (1) nach einem der vorhergehenden Ansprüche, **dadurch gekennzeichnet, dass** die elektrische Maschine (6) als Axialflussmaschine ausgebildet ist, bevorzugt, dass der Stator (37) einen, insbesondere plattenförmigen, Statorsockel (38) und mehrere, insbesondere in axialer Richtung, von dem Statorsockel (38) abstehende Statorzähne (39) aufweist, besonders bevorzugt, dass zumindest mittelbar oder unmittelbar um einen, insbesondere um jeden, Statorzahn (39) eine Spule (41) gewickelt ist.

## Claims

1. A drive device (1) for moving a window leaf or door leaf,
having an electric machine (6) comprising a, in particular single, stator (36) and an, in particular single, rotor (37) that is rotatable about a machine axis (X1), and having a gear (7) coupled to the electrical machine (3), wherein the gear (7) has a first gear element (42) that is rotatable coaxially with the machine axis (X1), in particular wherein the first gear element (42) is connected to the rotor (37) in a rotationally-fixed manner, wherein the gear (7) has a second gear element (43) which is operatively connected to the first gear element (42), wherein an axis of rotation (X4) of the second gear element (43) runs, in particular parallel to the machine axis (X1), in an installation space between the machine axis (X1) and an outer lateral surface of the rotor (37) that is extended virtually in the axial direction of the electric machine (6) or an outer lateral surface of the stator (36) that is extended virtually in the axial direction of the electric machine (6),
further having an output shaft (8) that is rotatable about an output axis (X2) for rotationally-fixed connection to a lever (9), and
a closer module (11) having a mechanical energy storage device (13) and a transmission element (18) for translating a linear movement of the mechanical energy storage device (13) into a rotary movement of the transmission element (18), wherein the closer module (11) comprises a closer gear wheel (10) operatively connected to the energy storage device (13) by means of the transmission element (18), and
the gear has an output wheel (22) which is coaxial with the output shaft (8) and is rotationally fixed, **characterised in that** the output axis (X2) runs parallel or coaxially to the machine axis (X1), and **in that**
the output wheel (22) engages with the closer gear wheel (10).

2. The drive device (1) according to claim 1, **characterised in that** the first gear element (42) and the second gear element (43) or the entire gear (7) is arranged entirely in one installation space, wherein the installation space is delimited by an outer lateral surface of the rotor (37) that is extended virtually in the axial direction of the electric machine (6) or by an outer lateral surface of the stator (36) that is extended virtually in the axial direction of the electric machine (6).

3. The drive device (1) according to one of the preceding claims, **characterised by** a machine housing and/or a gear-housing and/or a motor-gear housing (4), preferably in that the electric machine (6) is arranged at least partially within the machine housing, particularly preferably in that the gear (7) is arranged at least partially within the motor-gear housing (4).

4. The drive device (1) according to one of the preceding claims, **characterised in that** the gear (7) is designed as a toothed gear, in particular as a spur gear and/or a planetary gear or as an eccentric gear.

5. The drive device (1) according to one of the preceding claims, **characterised in that** the gear (7) is designed as a planetary gear, wherein the first gear element (42) is designed as a sun gear and at least one second gear element (43) as a planetary gear (31), preferably **in that** the gear (7) has at least one Wolfrom stage.

6. The drive device (1) according to claim 5, **characterised in that** the gear (7) comprises a first ring gear, which is engaged with the planetary gear (32), wherein the planetary gear (32) is mounted so as to be rotatable on a planetary carrier, wherein the planetary carrier is mounted so as to be rotatable on the sun gear or on the rotor (37), which is connected to the sun gear in a rotationally-fixed manner.

7. The drive device (1) according to one of the preceding claims, **characterised in that** the transmission element (18) is designed as a cam disc.

8. The drive device (1) according to claim 7, **characterised in that** the closer wheel (10) is arranged coaxially, in particular rotationally fixed, in relation to the transmission element (18), preferably **in that** the transmission element (18) and the closer wheel (10) are connected in a form-fitting and/or force-fitting and/or materially-bonded manner, particularly preferably in one piece.

9. The drive device (1) according to claim 7 or 8, **characterised in that** the gear (7) has a transmission ratio as a quotient of the speed of the rotor (37) as a dividend and the speed of the closer wheel (10) or the speed of the transmission element (18) of less than 125, preferably less than 100, particularly preferably less than 75.

10. The drive device (1) according to one of claims 7 to 9, **characterised by** at least one interface element for forming an operative connection between the electric machine and the closer module, in particular in that the interface element comprises at least one gear wheel.

11. The drive device (1) according to one of claims 7 to 10, **characterised by** a motor-gear housing (4) and a closer housing (12), wherein the electric machine (6) and the gear (7) are arranged at least partially within the motor-gear housing (4), wherein the energy storage device (13) is arranged within the closer housing (12), wherein the electric machine (6) and the energy storage device (13) are operatively connected by means of the interface element, preferably in that the interface element protrudes through a first opening (16) of the motor-gear housing (4) into the motor-gear housing (4) and/or through a second opening (17) of the closer housing (12) into the closer housing (12).

12. The drive device (1) according to one of the preceding claims, **characterised in that** the electric machine (6) is designed as an axial flux machine, preferably **in that** the stator (37) has an, in particular plate-shaped, stator base (38) and a plurality of stator teeth (39) protruding from the stator base (38), in particular in the axial direction, particularly preferably **in that** a coil (41) is wound at least indirectly or directly around one, in particular around each, stator tooth (39).

## Revendications

1. Dispositif d'entraînement (1) pour déplacer un battant de fenêtre ou un battant de porte,
comportant une machine électrique (6) comprenant un stator (36), en particulier unique, et un rotor (37), en particulier unique, pouvant tourner autour d'un axe de machine (X1), et comportant une transmission (7) accouplée à la machine électrique (3), dans lequel la transmission (7) présente un premier élément de transmission (42) pouvant tourner coaxialement avec l'axe de machine (X1), en particulier dans lequel le premier élément de transmission (42) est relié solidairement en rotation au rotor (37), dans lequel la transmission (7) présente un second élément de transmission (43), qui est en liaison active avec le premier élément de transmission (42), dans lequel un axe de rotation (X4) du second élément de transmission (43) s'étend dans un espace de montage entre l'axe de machine (X1) et une surface d'enveloppe extérieure du rotor (37) prolongée virtuellement dans la direction axiale de la machine électrique (6) ou une surface d'enveloppe extérieure du stator (36) prolongée virtuellement dans la direction axiale de la machine électrique (6), en particulier parallèlement à l'axe de machine (X1),
présentant en outre un arbre de sortie (8) pouvant tourner autour d'un axe de sortie (X2) pour la liaison solidaire en rotation avec un levier (9), et
un module de dispositif de fermeture (11) présentant un accumulateur d'énergie mécanique (13) et un élément de transformation (18) permettant de transformer un mouvement linéaire de l'accumulateur d'énergie mécanique (13) en un mouvement de rotation de l'élément de transformation (18), dans lequel le module de dispositif de fermeture (11) comprend une roue dentée de dispositif de fermeture (10) reliée activement à l'accumulateur d'énergie (13) au moyen de l'élément de transformation (18), et
la transmission présente une roue de sortie (22) coaxiale et solidaire en rotation avec l'arbre de sortie (8), **caractérisé en ce que** l'axe de sortie (X2) s'étend parallèlement ou coaxialement à l'axe de la machine (X1), et **en ce que**
la roue de sortie (22) est en prise avec la roue dentée de dispositif de fermeture (10).

2. Dispositif d'entraînement (1) selon la revendication 1, **caractérisé en ce que** le premier élément de transmission (42) et le second élément de transmission (43) ou l'ensemble de la transmission (7) sont entièrement agencés dans un espace de montage, dans lequel l'espace de montage est délimité par une surface d'enveloppe extérieure du rotor (37) prolongée virtuellement dans la direction axiale de la machine électrique (6) ou par une surface d'enveloppe extérieure du stator (36) prolongée virtuellement dans la direction axiale de la machine électrique (6).

3. Dispositif d'entraînement (1) selon l'une des revendications précédentes, **caractérisé par** un carter de machine et/ou un carter de transmission et/ou un carter de moteur-transmission (4), de préférence en ce que la machine électrique (6) est agencée au moins partiellement à l'intérieur du carter de machine, de manière particulièrement préférée en ce que la transmission (7) est agencée au moins partiellement à l'intérieur du carter de moteur-transmission (4).

4. Dispositif d'entraînement (1) selon l'une des revendications précédentes, **caractérisé en ce que** la transmission (7) est conçue comme une transmission à roues dentées, en particulier comme une transmission à axes parallèles et/ou une transmission planétaire, ou comme une transmission excentrique.

5. Dispositif d'entraînement (1) selon l'une des revendications précédentes, **caractérisé en ce que** la transmission (7) est conçue comme une transmission planétaire, dans lequel le premier élément de transmission (42) est conçu comme une roue solaire et au moins un second élément de transmission (43) est conçu comme une roue planétaire (31), de préférence **en ce que** la transmission (7) présente au moins un étage de tungstène.

6. Dispositif d'entraînement (1) selon la revendication 5, **caractérisé en ce que** la transmission (7) comprend une première roue intérieure qui est en prise avec la roue planétaire (32), dans lequel la roue planétaire (32) est montée rotative sur un châssis planétaire, dans lequel le châssis planétaire est monté rotatif sur la roue solaire ou sur le rotor (37) solidaire en rotation de la roue solaire.

7. Dispositif d'entraînement (1) selon l'une des revendications précédentes, **caractérisé en ce que** l'élément de transformation (18) est conçu sous forme de disque à came.

8. Dispositif d'entraînement (1) selon la revendication 7, **caractérisé en ce que** la roue de dispositif de fermeture (10) est agencée coaxialement, en particulier de manière solidaire en rotation, par rapport à l'élément de transformation (18), de préférence **en ce que** l'élément de transformation (18) et la roue de dispositif de fermeture (10) sont reliés par complémentarité de formes et/ou par adhérence et/ou par complémentarité de matière, de manière particulièrement préférée sont conçus d'une seule pièce.

9. Dispositif d'entraînement (1) selon la revendication 7 ou 8, **caractérisé en ce que** la transmission (7) présente un rapport de transformation en tant que quotient de la vitesse de rotation du rotor (37) en tant que dividende et de la vitesse de rotation de la roue de dispositif de fermeture (10) ou de la vitesse de rotation de l'élément de transformation (18) inférieur à 125, de préférence inférieur à 100, de manière particulièrement préférée inférieur à 75.

10. Dispositif d'entraînement (1) selon l'une des revendications 7 à 9, **caractérisé par** au moins un élément d'interface permettant de former une liaison active entre la machine électrique et le module de dispositif de fermeture, en particulier en ce que l'élément d'interface comprend au moins une roue dentée.

11. Dispositif d'entraînement (1) selon l'une des revendications 7 à 10, **caractérisé par** un carter de moteur-transmission (4) et un carter de dispositif de fermeture (12), dans lequel la machine électrique (6) et la transmission (7) sont agencées au moins partiellement à l'intérieur du carter de moteur-transmission (4), dans lequel l'accumulateur d'énergie (13) est agencé à l'intérieur du carter de dispositif de fermeture (12), dans lequel la machine électrique (6) et l'accumulateur d'énergie (13) sont en liaison active au moyen de l'élément d'interface, de préférence en ce que l'élément d'interface pénètre à travers une première ouverture (16) du carter de moteur-transmission (4) dans le carter de moteur-transmission (4) et/ou à travers une seconde ouverture (17) du carter de dispositif de fermeture (12) dans le carter de dispositif de fermeture (12).

12. Dispositif d'entraînement (1) selon l'une des revendications précédentes, **caractérisé en ce que** la machine électrique (6) est conçue comme une machine à flux axial, de préférence **en ce que** le stator (37) présente un socle de stator (38), en particulier en forme de plaque, et plusieurs dents de stator (39) dépassant du socle de stator (38), en particulier dans la direction axiale, de manière particulièrement préférée **en ce qu'**une bobine (41) est enroulée au moins directement ou indirectement autour d'une, en particulier de chaque, dent de stator (39).
